# EUROPÄISCHE PATENTANMELDUNG

(11) **EP 4 191 832 A1**
(43) Veröffentlichungstag der Anmeldung: **07.06.2023**
(21) Anmeldenummer: 22208547.4
(22) Anmeldetag: 21.11.2022
(51) Int. Cl.: H02K 1/24, H02K 1/32, H02K 3/24

(54) **ROTOR FÜR EINE ELEKTRISCHE MASCHINE MIT EINEM AXIAL VERLAUFENDEN KÜHLKANAL**

(30) Priorität: 06.12.2021 DE 102021213809
(71) Anmelder: Valeo eAutomotive Germany GmbH, 91056 Erlangen (DE)
(72) Erfinder: Siepker, Carsten, 97616 Bad Neustadt a.d.Saale (DE); Wieczorek, Christoph, 97616 Bad Neustadt a.d.Saale (DE); Bach, Regina, 97616 Bad Neustadt a.d.Saale (DE); Wolf, Nico, 97616 Bad Neustadt a.d.Saale (DE); Schlereth, Alexander, 97616 Bad Neustadt a.d.Saale (DE)
(74) Vertreter: Valeo Powertrain Systems

(57) **Zusammenfassung**

Rotor (1, 19) für eine elektrische Maschine (27), umfassend eine Rotorwelle (3, 20), ein auf der Rotorwelle (3, 20) angeordnetes Blechpaket (2) mit einer Mehrzahl gestapelter Elektrobleche, eine an einer Axialseite des Blechpakets (2) angeordnete erste Endplatte (4) mit entlang ihres Umfanges angeordneten radialen Vorsprüngen (6), eine an der gegenüberliegenden Axialseite des Blechpakets (2) angeordnete zweite Endplatte (5) mit entlang ihres Umfanges angeordneten radialen Vorsprüngen (7), mehrere Rotorwicklungen (8), die jeweils um einen Vorsprung (6) der ersten Endplatte (4) und einen axial gegenüberliegenden Vorsprung (7) der zweiten Endplatte (5) gewunden sind, eine topfförmige erste Endkappe (12), welche die erste Endplatte (4) axial abdeckt, so dass ein erster Hohlraum (14) zwischen der ersten Endkappe (12) und der ersten Endplatte (4) gebildet ist, eine topfförmige zweite Endkappe (15), welche die zweite Endplatte (5) axial abdeckt, so dass ein zweiter Hohlraum (16) zwischen der zweiten Endkappe (15) und der zweiten Endplatte (5) gebildet ist, und einen zwischen zwei benachbarten Rotorwicklungen (8) axial verlaufenden Kühlkanal (17), der den ersten Hohlraum (14) mit dem zweiten Hohlraum (16) verbindet.

## Beschreibung

Die Erfindung betrifft einen Rotor für eine elektrische Maschine, eine elektrische Maschine mit einem Rotor und ein Fahrzeug mit einer elektrischen Maschine.

Der Rotor weist eine Rotorwelle und ein auf der Rotorwelle angeordnetes, aus gestapelten Elektroblechen gebildetes Blechpaket auf. Der Rotor gehört gemeinsam mit einem Stator zu einer elektrischen Maschine.

Elektrische Maschinen dieser Art werden in zunehmendem Maße in elektrisch angetriebenen Fahrzeugen und Hybridfahrzeugen verwendet, überwiegend als Elektromotor für den Antrieb eines Rads oder einer Achse eines derartigen Fahrzeugs.

Ein solcher Elektromotor ist zumeist mechanisch mit einem Getriebe zur Drehzahlanpassung gekoppelt. Daneben ist der Elektromotor in der Regel elektrisch mit einem Wechselrichter gekoppelt, der aus einer von einer Batterie gelieferten Gleichspannung eine Wechselspannung für den Betrieb des Elektromotors erzeugt, beispielsweise eine mehrphasige Wechselspannung.

Es ist auch möglich, eine elektrische Maschine mit einem derartigen Rotor als Generator zur Rekuperation von Bewegungsenergie eines Fahrzeugs zu betreiben. Hierzu wird die Bewegungsenergie zunächst in elektrische Energie und dann in chemische Energie einer Fahrzeugbatterie umgewandelt.

Bei einer bestimmten Bauart von elektrisch erregten Synchronmotoren (EESM) besitzt der Rotor Rotorwicklungen, die mit Gleichstrom gespeist werden, um ein magnetisches Erregerfeld zu erzeugen. Wenn mit den Statorwicklungen eines zugehörigen Stators ein Drehfeld erzeugt wird, bewirkt das eine Kraftwirkung auf den Rotor, sodass dieser synchron zum Statordrehfeld rotiert.

Die Rotorwicklungen werden dabei allerdings stark erwärmt, sodass eine Kühlung erforderlich ist. Die Kühlung kann beispielsweise durch Aufsprühen von Öl auf die Axialseiten des Rotors erfolgen. Allerdings wirkt diese Art der Kühlung nur oberflächlich und ist deshalb wenig effektiv.

Der Erfindung liegt daher die Aufgabe zugrunde, einen Rotor für eine elektrische Maschine anzugeben, der während des Betriebs besser gekühlt werden kann.

Zur Lösung dieser Aufgabe ist ein Rotor mit den Merkmalen des Anspruchs 1 vorgesehen.

Der erfindungsgemäße Rotor umfasst eine an einer Axialseite des Blechpakets angeordnete erste Endplatte mit entlang ihres Umfanges angeordneten radialen Vorsprüngen, eine an der gegenüberliegenden Axialseite des Blechpakets angeordnete zweite Endplatte mit entlang ihres Umfanges angeordneten radialen Vorsprüngen, mehrere Rotorwicklungen, die jeweils um einen Vorsprung der ersten Endplatte und einen axial gegenüberliegenden Vorsprung der zweiten Endplatte gewunden sind, eine topfförmige erste Endkappe, welche die erste Endplatte axial abdeckt, so dass ein erster Hohlraum zwischen der ersten Endkappe und der ersten Endplatte gebildet ist, eine topfförmige zweite Endkappe, welche die zweite Endplatte axial abdeckt, so dass ein zweiter Hohlraum zwischen der zweiten Endkappe und der zweiten Endplatte gebildet ist, und einen zwischen zwei benachbarten Rotorwicklungen axial verlaufenden Kühlkanal, der den ersten Hohlraum mit dem zweiten Hohlraum verbindet.

Die Erfindung beruht auf der Erkenntnis, dass eine verbesserte Kühlung erzielt werden kann, indem das Kühlmittel den Rotorwicklungen unmittelbar über einen axial verlaufenden Kühlkanal zugeführt wird. Das Kühlmittel strömt dabei von dem ersten Hohlraum, der sich an einer Axialseite befindet, zu dem zweiten Hohlraum, der sich an der gegenüberliegenden Axialseite befindet, an den Rotorwicklungen entlang. Im Vergleich zu einem herkömmlichen Rotor, bei dem lediglich Öl auf die Axialseiten gesprüht wird, kann der erfindungsgemäße Rotor wesentlich besser und homogener gekühlt werden.

Die entlang ihres Umfanges angeordneten radialen Vorsprüngen einer Endplatte können auch als "Zähne" oder "Plattenfortsätze" bezeichnet werden und dienen unter anderem zum Halten der Rotorwicklungen in einer bestimmten Position.

Anstelle nur eines axial verlaufenden (beziehungsweise axialen) Kühlkanals kann der Rotor auch mehrere axiale Kühlkanäle aufweisen, die jeweils zwischen zwei benachbarten Rotorwicklungen verlaufen und den ersten Hohlraum mit dem zweiten Hohlraum verbinden.

Eine Weiterbildung der Erfindung sieht vor, dass die zweite Endkappe einen axialen Auslass zum Abführen von Kühlmittel aus dem zweiten Hohlraum aufweist. Das abgeführte Kühlmittel kann mittels einer Pumpe in einem Kühlreislauf gefördert werden, so dass es wieder in den Rotor oder in die elektrische Maschine gelangen kann. Anstelle nur eines solchen Auslasses kann die zweite Endkappe auch mehrere solche Auslässe aufweisen. Diese können beispielsweise entlang des Umfanges der zweiten Endkappe verteilt sein.

Bei dem erfindungsgemäßen Rotor wird es bevorzugt, dass die Rotorwelle einen zentralen Kühlkanal aufweist, der in den ersten Hohlraum mündet. Die Rotorwelle ist dazu hohl ausgebildet und wird von dem Kühlmittel durchströmt, so dass die Rotorwelle gekühlt wird. An einem axialen Ende besitzt die Rotorwelle einen oder mehreren radiale Rotorwellenauslässe, die in dem ersten Hohlraum münden. Von dort aus kann das Kühlmittel zu den Rotorwicklungen und in den axialen Kühlkanal gelangen.

Eine Ausgestaltung der Erfindung sieht vor, dass die erste Endkappe einen axialen Auslass zum Abführen von Kühlmittel aus dem ersten Hohlraum aufweist, der gegenüber dem Auslass der zweiten Endkappe radial nach innen versetzt angeordnet ist. Beim Betrieb des erfindungsgemäßen Rotors sammelt sich Kühlmittel durch die Zentrifugalkraft in den radial äußeren Bereichen der Hohlräume. Wegen des Versatzes tritt das Kühlmittel erst dann aus dem Auslass der ersten Endkappe aus, wenn das angesammelte Kühlmittel ein bestimmtes Volumen überschreitet. Dadurch ist sichergestellt, dass der axiale Kühlkanal trotz des Auslasses der ersten Endkappe permanent von Kühlmittel durchströmt wird, das an der gegenüberliegenden Axialseite durch den Auslass der zweiten Endkappe aus dem Rotor austreten kann. Auf diese Weise ist stets eine optimale Kühlung gewährleistet.

Anstelle nur eines solchen Auslasses kann die erste Endkappe auch mehrere solche Auslässe aufweisen. Diese können beispielsweise entlang des Umfanges der ersten Endkappe verteilt sein.

Bei einer alternativen Ausgestaltung des erfindungsgemäßen Rotors ist vorgesehen, dass die erste Endkappe einen axialen Einlass zum Zuführen von Kühlmittel in den ersten Hohlraum aufweist. Dazu kann das Kühlmittel beispielsweise durch den Einlass in den ersten Hohlraum gesprüht werden und von dort entlang der Rotorwicklungen in den zweiten Hohlraum gelangen, bevor es den Rotor durch den Auslass der zweiten Endkappe verlässt. Vorzugsweise ist der axiale Einlass der ersten Endkappe bezogen auf den Auslass der zweiten Endkappe radial nach innen versetzt angeordnet. Deshalb tritt Kühlmittel erst dann aus dem Einlass aus, wenn das angesammelte Kühlmittel ein bestimmtes Volumen überschreitet. Dadurch ist sichergestellt, dass der axiale Kühlkanal trotz des Einlasses permanent von Kühlmittel durchströmt wird, das an der gegenüberliegenden Axialseite durch den Auslass der zweiten Endkappe aus dem Rotor austreten kann. Auf diese Weise wird stets eine optimale Kühlung gewährleistet.

Anstelle nur eines solchen Einlasses kann die zweite Endkappe auch mehrere solche Einlässe aufweisen. Diese können beispielsweise entlang des Umfanges der ersten Endkappe verteilt sein.

Vorzugsweise ist der axial verlaufende Kühlkanal des erfindungsgemäßen Rotors mit einem Poltrenner abgedeckt beziehungsweise begrenzt, der sich axial zwischen den beiden benachbarten Rotorwicklungen erstreckt. Der Poltrenner kann folglich die radiale Außenseite des axialen Kühlkanals bilden, wobei die radiale Innenseite des axialen Kühlkanals vom Blechpaket gebildet werden kann. Ferner werden zwei jeweils Innenseite und Außenseite verbindende Seiten des axialen Kühlkanals von den beiden Rotorwicklungen gebildet.

Bei dem erfindungsgemäßen Rotor kann es vorgesehen sein, dass der erste Hohlraum und/oder der zweite Hohlraum jeweils als ein radial verlaufender Kühlkanal ausgebildet ist beziehungsweise sind. Der radial verlaufende (radiale) Kühlkanal kann beispielsweise in einer Vertiefung einer Endkappe verlaufen, die von einer Endplatte begrenzt wird. Auch in diesem Fall kann Kühlmittel entweder über die Rotorwelle oder einen Einlass dem ersten Hohlraum beziehungsweise radialen Kühlkanal zugeführt werden und durch diesen zu den Rotorwicklungen strömen.

Daneben betrifft die Erfindung eine elektrische Maschine mit einem Rotor der beschriebenen Art und einem Stator, gegenüber dem der Rotor drehbar ist. Der Stator kann ein weiteres Blechpaket (Statorpaket) aufweisen, das aus gestapelten Elektroblechen gebildet ist. Daneben kann der Stator Wicklungen elektrischer Leiter besitzen, zum Beispiel in Form von Spulenwicklungen oder Flachdrahtwicklungen. Vorzugsweise kann die elektrische Maschine zusätzlich eine Düse aufweisen, die auf den Einlass der ersten Endkappe gerichtet ist. Die Düse kann fest mit dem Stator verbunden sein, beispielsweise indem die Düse an einem Gehäuse der elektrischen Maschine befestigt ist.

Ferner betrifft die Erfindung ein Fahrzeug mit einer derartigen elektrischen Maschine, die zum Antreiben des Fahrzeugs vorgesehen ist. Die Maschine kann insbesondere ein Rad oder eine Achse des Fahrzeugs antreiben.

Die Erfindung wird nachfolgend anhand von Ausführungsbeispielen unter Bezugnahme auf die Figuren erläutert. Die Figuren sind schematische Darstellungen und zeigen:
- Fig. 1: eine geschnittene Seitenansicht eines erfindungsgemäßen Rotors gemäß einem ersten Ausführungsbeispiel,
- Fig. 2: einen Schnitt entlang der Linie II-II von Figur 1,
- Fig. 3: eine geschnittene Seitenansicht eines erfindungsgemäßen Rotors gemäß einem zweiten Ausführungsbeispiel, und
- Fig. 4: ein erfindungsgemäßes Fahrzeug mit einer elektrischen Maschine mit dem Rotor.

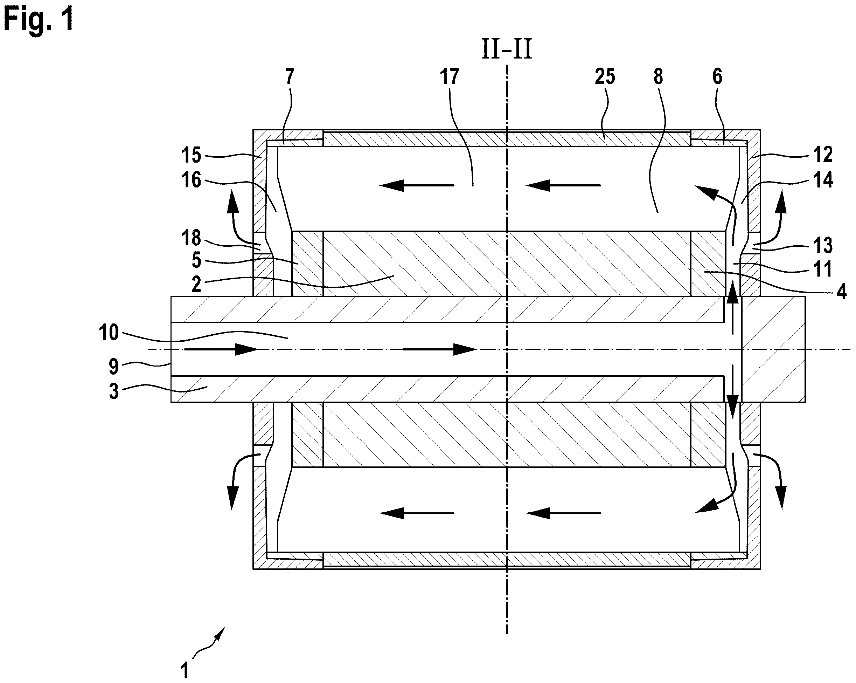

Der in Figur 1 in einer geschnittenen Seitenansicht gezeigte Rotor 1 ist für eine elektrische Maschine vorgesehen, die zum Antreiben eines Fahrzeugs eingesetzt wird. Der Rotor 1 umfasst ein aus gestapelten Elektroblechen gebildetes zylinderförmiges Blechpaket 2, das eine Rotorwelle 3 form- und/oder kraftschlüssig umschließt. Bei den Elektroblechen kann es sich um identisch ausgebildete Stanzteile handeln.

An einer ersten Axialseite des Blechpakets 2 befindet sich eine erste Endplatte 4. An der entgegengesetzten zweiten Axialseite des Blechpakets 2 befindet sich eine zweite Endplatte 5. Die Endplatten 4, 5 besitzen jeweils radiale Vorsprünge 6, 7 (auch "Plattenfortsätze"), um die mehrere Rotorwicklungen 8 gewunden sind. Beide Endplatten 4, 5 weisen jeweils einen Aluminiumkern auf, der mit Kunststoff umspritzt ist.

Die Rotorwelle 3 ist hohl ausgebildet und weist an ihrer in Figur 1 linken Axialseite einen Einlass 9 für Kühlmittel auf, das unter anderem Öl enthalten kann. Ein zentraler Kühlkanal 10 erstreckt sich von dem Einlass 9 axial bis zum gegenüberliegenden Ende der Rotorwelle 3. Der Einlass 9 und der zentrale Kühlkanal 10 sind Bestandteile eines Kühlmittelkreislaufs, in dem das Kühlmittel zirkuliert. Der zentrale Kühlkanal 10 mündet in einen ersten Hohlraum 14, welcher zwischen einer ersten Endkappe 12 und der ersten Endplatte 4 gebildet ist. Optional kann der erste Hohlraum 14 auch als radialer Kühlkanal 11 ausgebildet sein.

Die erste Endkappe 12 weist eine zentrale Öffnung auf, die von der Rotorwelle 3 durchsetzt wird. Zwischen dem Zentrum und dem Außenumfang der ersten Endkappe 12 sind mehrere über den Umfang verteilte axiale Auslässe 13 vorhanden, durch die Kühlmittel aus dem Rotor 1 ausströmen kann. In Figur 1 erkennt man, dass die erste Endkappe 12 topfförmig ausgebildet ist und einen axialen Abschnitt aufweist, der an den radialen Vorsprüngen 6 der ersten Endplatte 4 anliegt. Von dem ersten Hohlraum 14 aus verläuft zwischen den Rotorwicklungen 8 ein axialer Kühlkanal 17, der radial innen von dem Blechpaket 2 und radial außen von einem Poltrenner 25 begrenzt wird.

An der gegenüberliegenden, in Figur 1 linken Seite des Rotors 1 befindet sich eine zweite Endkappe 15, die die zweite Endplatte 5 mit ihren radialen Vorsprüngen 7 abdeckt. Die zweite Endkappe 15 umgibt einen zweiten Hohlraum 16, in den der axiale Kühlkanal 17 mündet.

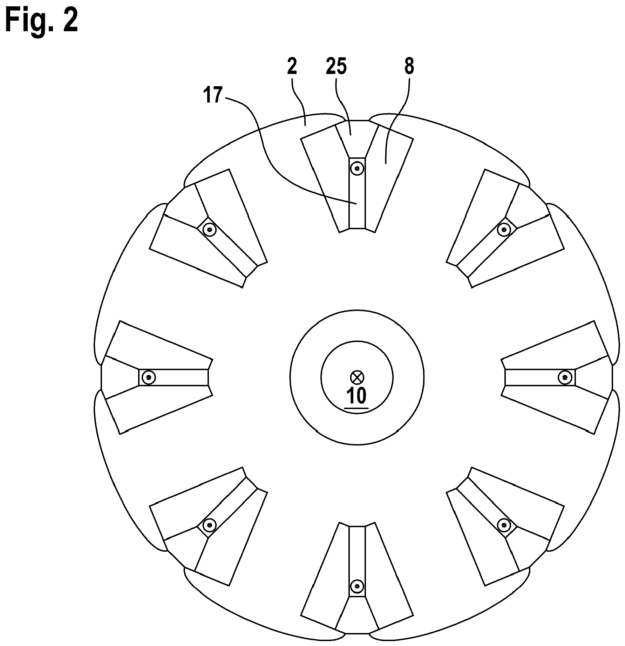

Figur 2 zeigt einen Schnitt entlang der Linie II-II von Figur 1. Man erkennt dort, dass insgesamt acht identisch gestaltete axiale Kühlkanäle 17 vorhanden sind, die parallel zu dem zentralen Kühlkanal 10 verlaufen.

In den Figuren wird die Strömungsrichtung des Kühlmittels symbolisch durch Pfeile dargestellt. Zusätzlich bezeichnet ein kleiner Kreis mit einem Kreuz in die Zeichnungsebene strömendes Kühlmittel, ein kleiner Kreis mit einem Punkt bezeichnet aus der Zeichnungsebene strömendes Kühlmittel.

In Figur 2 ist dargestellt, dass sich die axialen Kühlkanäle 17 jeweils zwischen zwei benachbarten Rotorwicklungen 8 erstrecken. Jeder axiale Kühlkanal 17 ist mit einem Poltrenner 25 abgedeckt, der sich zwischen den beiden benachbarten Rotorwicklungen 8 befindet.

Wieder auf Figur 1 bezugnehmend ist dort erkennbar, dass Kühlmittel nach dem Durchströmen der axialen Kühlkanäle 17 in den zweiten Hohlraum 16 gelangt, wo es die Wicklungsköpfe der Rotorwicklungen 8 kühlt.

Ähnlich wie die axialen Auslässe 13 der ersten Endkappe 12 weist auch die zweite Endkappe 15 über den Umfang verteilt angeordnete Auslässe 18 auf. In diesem Ausführungsbeispiel sind insgesamt acht Auslässe 18 vorhanden, so dass die Anzahl der Auslässe 18 der Anzahl der Rotorpole entspricht. Die Anzahl der Auslässe kann jedoch auch von der Anzahl der Rotorpole abweichen. Beispielsweise können zwei, vier, sechs oder zwölf Auslässe vorhanden sein.

Nach dem Austreten aus den Auslässen 18 wird das Kühlmittel im Kühlmittelkreislauf weiterbefördert.

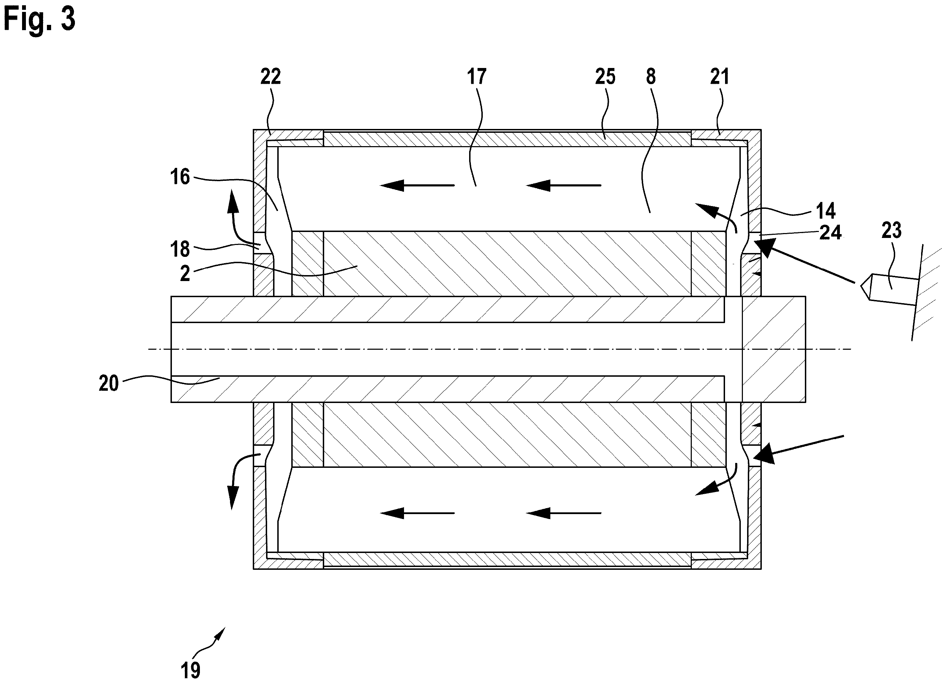

Figur 3 zeigt ein zweites Ausführungsbeispiel eines erfindungsgemäßen Rotors 19 in einer geschnittenen Seitenansicht. Diejenigen Komponenten, die Komponenten des ersten Ausführungsbeispiels entsprechen, werden nicht nochmals im Detail erläutert.

Der Rotor 19 weist eine massive Rotorwelle 20, ein Blechpaket 2 und Rotorwicklungen 8 auf. Die Axialseiten des Rotors 19 werden durch eine erste topfförmige Endkappe 21 und eine zweite topfförmige Endkappe 22 abgedeckt. Eine schematisch dargestellte Düse 23 ist in Axialrichtung beabstandet von dem Rotor 19 angeordnet. Die Düse 23 ist fest mit einem den Rotor 19 umgebenden Stator (nicht gezeigt) verbunden, wozu die Düse 23 beispielweise an einem Gehäuse der elektrischen Maschine befestigt ist. Die erste Endkappe 21 weist in der Nähe ihres Zentrums, benachbart zu der Durchgangsöffnung für die Rotorwelle 20, einen axialen Einlass 24 auf. Bei anderen Ausführungsbeispielen der Erfindung können auch mehrere in Umfangsrichtung zueinander beabstandet angeordnete axiale Einlässe vorhanden sein.

Durch die Düse 23 kann Kühlmittel mit Überdruck durch den Einlass 24 in einen ersten Hohlraum 14 gesprüht werden. Das Kühlmittel gelangt dann aus dem ersten Hohlraum 14 entlang von axialen Kühlkanälen 17 in einen zweiten Hohlraum 16 und verlässt den Rotor 19 durch die axiale Auslässe 18.

Der Einlass 24 ist bezogen auf die Auslässe 18 radial nach innen versetzt angeordnet. Dadurch ist sichergestellt, dass beim Betrieb des Rotors 19 die axialen Kühlkanäle 17 permanent von Kühlmittel durchströmt werden. Der radial äußere Bereich der Hohlräume 14, 16 kann bis zu den axialen Auslässen 18 mit Kühlmittel gefüllt sein, wodurch insbesondere die Rotorwicklungen 8 ausreichend gekühlt werden.

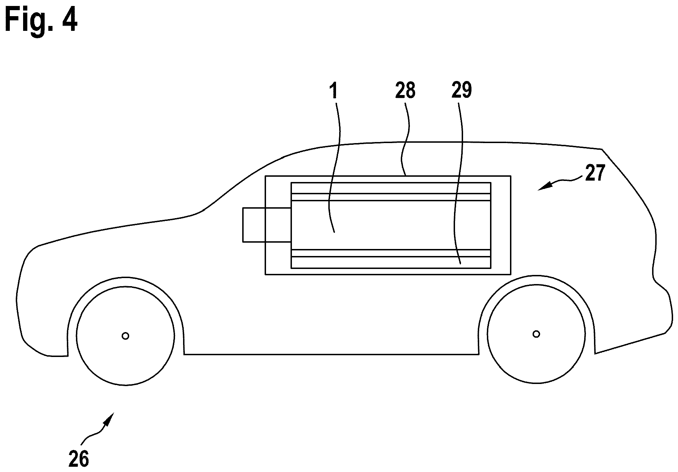

Figur 4 zeigt ein Fahrzeug 26 mit einer elektrischen Maschine 27, die zum Antreiben des Fahrzeugs 26 dient. Die elektrische Maschine 27 weist ein Gehäuse 28 auf, in dem der erfindungsgemäße Rotor 1 und ein Stator 29 aufgenommen sind, der den Rotor 1 umgibt.

### Bezugszeichenliste

- 1: Rotor
- 2: Blechpaket
- 3: Rotorwelle
- 4: erste Endplatte
- 5: zweite Endplatte
- 6: Vorsprung
- 7: Vorsprung
- 8: Rotorwicklung
- 9: Einlass
- 10: zentraler Kühlkanal
- 11: radialer Kühlkanal
- 12: erste Endkappe
- 13: Auslass
- 14: erster Hohlraum
- 15: zweite Endkappe
- 16: zweiter Hohlraum
- 17: axialer Kühlkanal
- 18: Auslass
- 19: Rotor
- 20: Rotorwelle
- 21: erste Endkappe
- 22: zweite Endkappe
- 23: Düse
- 24: Einlass
- 25: Poltrenner
- 26: Fahrzeug
- 27: elektrische Maschine
- 28: Gehäuse
- 29: Stator

## Patentansprüche

1. Rotor (1, 19) für eine elektrische Maschine (27), umfassend:
- eine Rotorwelle (3, 20),
- ein auf der Rotorwelle (3, 20) angeordnetes Blechpaket (2) mit einer Mehrzahl gestapelter Elektrobleche,
- eine an einer Axialseite des Blechpakets (2) angeordnete erste Endplatte (4) mit entlang ihres Umfanges angeordneten radialen Vorsprüngen (6),
- eine an der gegenüberliegenden Axialseite des Blechpakets (2) angeordnete zweite Endplatte (5) mit entlang ihres Umfanges angeordneten radialen Vorsprüngen (7),
- mehrere Rotorwicklungen (8), die jeweils um einen Vorsprung (6) der ersten Endplatte (4) und einen axial gegenüberliegenden Vorsprung (7) der zweiten Endplatte (5) gewunden sind,
- eine topfförmige erste Endkappe (12), welche die erste Endplatte (4) axial abdeckt, so dass ein erster Hohlraum (14) zwischen der ersten Endkappe (12) und der ersten Endplatte (4) gebildet ist,
- eine topfförmige zweite Endkappe (15), welche die zweite Endplatte (5) axial abdeckt, so dass ein zweiter Hohlraum (16) zwischen der zweiten Endkappe (15) und der zweiten Endplatte (5) gebildet ist, und
- einen zwischen zwei benachbarten Rotorwicklungen (8) axial verlaufenden Kühlkanal (17), der den ersten Hohlraum (14) mit dem zweiten Hohlraum (16) verbindet.

2. Rotor nach Anspruch 1, wobei die zweite Endkappe (15) einen axialen Auslass (18) zum Abführen von Kühlmittel aus dem zweiten Hohlraum (16) aufweist.

3. Rotor nach Anspruch 1 oder 2, wobei die Rotorwelle (3) einen zentralen Kühlkanal (10) aufweist, der in den ersten Hohlraum (14) mündet.

4. Rotor nach Anspruch 3, wobei die erste Endkappe (12) einen axialen Auslass (13) zum Abführen von Kühlmittel aus dem ersten Hohlraum (14) aufweist, der gegenüber dem Auslass (18) der zweiten Endkappe (15) radial nach innen versetzt angeordnet ist.

5. Rotor nach Anspruch 1 oder 2, wobei die erste Endkappe (12) einen axialen Einlass (24) zum Zuführen von Kühlmittel in den ersten Hohlraum (14) aufweist.

6. Rotor nach den Anspruch 5, wobei der Einlass (24) bezogen auf den Auslass (18) der zweiten Endkappe (15) radial nach innen versetzt angeordnet ist.

7. Rotor nach einem der vorangehenden Ansprüche, wobei der axial verlaufende Kühlkanal (17) von einem Poltrenner (25) abgedeckt ist, der sich axial zwischen den beiden Rotorwicklungen (8) erstreckt.

8. Rotor nach einem der vorangehenden Ansprüche, wobei der erste Hohlraum (14) und/oder der zweite Hohlraum (16) jeweils als ein radial verlaufender Kühlkanal ausgebildet ist beziehungsweise sind.

9. Elektrische Maschine (27), mit einem Rotor (1, 19) nach einem der Ansprüche 1 bis 8 und einem Stator (29).

10. Elektrische Maschine, mit einem Rotor (1, 19) nach Anspruch 5 oder 6, einem Stator (29), und einer fest mit dem Stator (29) verbundenen Düse (23), die auf den Einlass (24) gerichtet ist.

11. Fahrzeug (26) mit einer elektrischen Maschine (27) nach Anspruch 9 oder 10, die zum Antreiben des Fahrzeugs (26) vorgesehen ist.
